# EUROPEAN PATENT APPLICATION

(11) **EP 4 350 133 A1**
(43) Date of publication of application: **10.04.2024**
(21) Application number: 22816254.1
(22) Date of filing: 09.02.2022
(51) Int. Cl.: F01N 3/04, F01N 3/00, F01N 11/00, B01D 53/14, B01D 53/78, B01D 53/79, C02F 1/66

(54) **SYSTEM FOR CAPTURING CARBON DIOXIDE AND SULFUR OXIDES AND UTILIZING CARBON FOR SHIPS**

(30) Priority: 31.05.2021 KR 20210069998
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/001990
(87) International publication number: WO 2022/255590

(57) **Abstract**

Proposed is a carbon dioxide and sulfur oxide capture system for ships that can capture carbon dioxide in flue gas using a basic alkaline mixture and use the captured carbon dioxide to capture sulfur oxides in the flue gas. The carbon dioxide and sulfur oxide capture system for ships uses sodium carbonate or sodium hydrogen carbonate prepared from the captured carbon dioxide as a desulfurization agent to capture sulfur oxides in the flue gas discharged from ships, thereby simultaneously producing carbon dioxide and sulfur oxides in one system.

## Description

### Technical Field

The present disclosure relates to a carbon dioxide and sulfur oxide capture system for ships that can capture carbon dioxide in flue gas using a basic alkali mixture and use the captured carbon dioxides to capture sulfur oxides in the flue gas.

### Background Art

Most ships require high output power, and thus heavy fuel oil (HFO) is used as fuel in ships. Accordingly, flue gas containing many harmful substances is discharged from the ship into the atmosphere. Representative harmful substances among these flue gases include fine particles, nitrogen oxides, sulfur oxides, carbon dioxide, and the like.

In particular, carbon dioxide is designated as a greenhouse gas that causes global warming, and although the global warming index of carbon dioxide is lower than that of other greenhouse gases, it is important that carbon dioxide accounts for 80% of all greenhouse gas emissions and can regulate emissions. For this reason, the International Maritime Organization (IMO) finally decided to introduce the energy efficiency design index (EEDI) for new ships to be built in the future, and ships will have to reduce greenhouse gases by an average of 30% by 2025.

Accordingly, although the existing trend is changing from heavy fuel oil (HFO) and marine diesel oil (MDO) to liquefied natural gas (LNG), the use of LNG as fuel can satisfy regulations related to NOx and SOx, but it is difficult to satisfy regulations related to carbon dioxide emissions that will be strengthened in the future.

In response, carbon dioxide treatment technologies such as carbon capture and storage (CCS), which captures carbon dioxide from combustion gases and then injects and stores the collected carbon dioxide underground or under the seabed, and enhanced oil recovery (EOS), which injects and recovers oil remaining underground after primary or secondary recovery, are also being applied to ships.

However, in order to process carbon dioxide in the flue gas generated by the crude oil carrier, the generated carbon dioxide must be captured and transferred to the outside, which is expensive and complicated in the system, such as the liquefaction process of carbon dioxide.

Therefore, there is an urgent need for a method for efficiently reducing carbon dioxide emitted from ships.

### Disclosure

### Technical Problem

In order to solve the above problems, the present disclosure is to provide a system for reducing carbon dioxide and sulfur oxide in flue gas generated from ships.

Another objective of the present disclosure is to provide a carbon dioxide and sulfur oxide capture system for ships that can capture carbon dioxide in flue gas using a basic alkaline mixture and use the captured carbon dioxide to capture sulfur oxide in the flue gas.

### Technical Solution

In order to solve the above problem,

an embodiment of the present disclosure provides a carbon dioxide and sulfur oxide capture system for ships, the system including: a mixer for supplying a basic alkaline mixture; an absorption tower for capturing carbon dioxide in the flue gas by reacting the basic alkaline mixture supplied from the mixer and the flue gas having fine droplets through a bubbler installed at the bottom; a separator for collecting a reactant containing carbon dioxide captured in the absorption tower and separating a carbon dioxide reactant and a waste solution from the reactant; and a discharge unit for sending carbon dioxide reactants from the separator to the absorption tower to capture sulfur oxides in the flue gas, and discharging the captured sulfur oxides, carbon dioxide reactants, and residual flue gas.

The bubbler may form flue gas microbubbles using the flue gas.

The mixer may be one in which the basic alkaline solution supplied from the basic alkaline solution storage tank and the water supplied from the water supply source are mixed.

The basic alkaline solution and water may be mixed in a ratio of 1:1 to 1:5.

The average pH of the basic alkaline mixture may be at least pH 12.

The basic alkaline mixture may include at least one oxide selected from the group consisting of SiO₂, Al₂O₃, Fe₂O₃, TiO₂, MgO, MnO, CaO, Na₂O, K₂O, and P₂O₃; at least one metal selected from the group consisting of Li, Cr, Co, Ni, Cu, Zn, Ga, Sr, Cd, and Pb; and at least one liquid composition selected from the group consisting of sodium tetraborate (Na₂B₄O₇·10H₂O), sodium hydroxide (NaOH), sodium silicate (Na₂SiO₃), and hydrogen peroxide (H₂O₂).

The absorption tower may be supplied with the basic alkaline mixture from the mixer through a plurality of nozzles installed on the top thereof.

The absorption tower may be configured in series, parallel, or a series and parallel complex arrangement.

The carbon dioxide and sulfur oxide capture system for ships may further include: a monitoring unit for monitoring the filling level and pH of the basic alkaline mixture in the absorption tower; and a control unit for controlling the supply amount of the basic alkaline mixture by the monitoring unit.

The carbon dioxide reactant may include sodium carbonate (Na₂CO₃) or sodium hydrogen carbonate (NaHCO₃).

### Advantageous Effects

According to the present disclosure, the carbon dioxide and sulfur oxide capture system for ships may reduce carbon dioxide by capturing carbon dioxide in the flue gas discharged from the ship, and use the captured carbon dioxide to produce sodium carbonate or sodium hydrogen carbonate.

In addition, the carbon dioxide and sulfur oxide capture system for ships, according to the present disclosure, uses sodium carbonate or sodium hydrogen carbonate produced from the captured carbon dioxide as a desulfurization agent to capture sulfur oxides from flue gases discharged from ships so that carbon dioxide and sulfur oxides can be simultaneously captured as one system.

### Description of Drawings

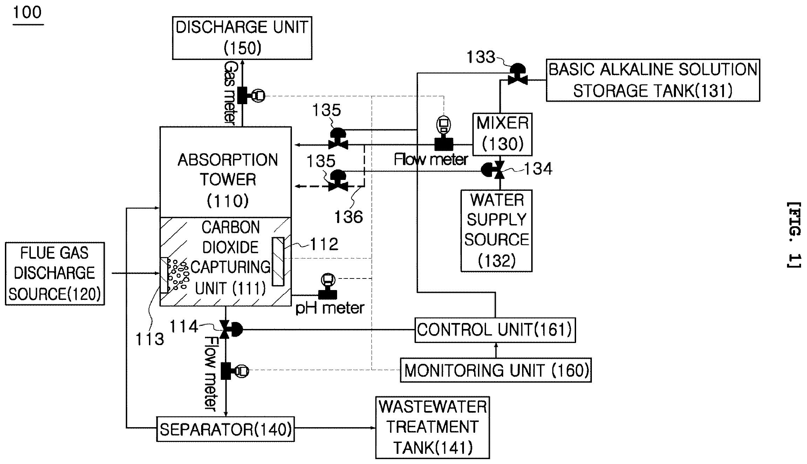

FIG. 1 is a schematic diagram illustrating a carbon dioxide and sulfur oxide capture system for ships according to the present disclosure.

### Best Mode

Since the present disclosure may apply various changes and have various embodiments, specific embodiments will be illustrated in the drawings and described in detail in the detailed description.

While specific embodiments of the disclosure will be described herein below, they are only for illustrative purposes and should not be construed as limiting to the present disclosure. Accordingly, the present disclosure should be construed to cover not only the specific embodiments but also cover all modifications, equivalents, and substitutions that fall within the spirit and technical scope of the present disclosure.

Terms such as first and second may be used to describe various elements, but the elements should not be limited by the terms. The above terms are used only for the purpose of distinguishing one component from another. For example, without departing from the scope of the present disclosure, a first component may be referred to as a second component, and similarly, the second component may also be referred to as a first component.

In this disclosure, the term "include" or "have" is intended to designate that a feature, number, step, operation, component, part, or a combination thereof described in the specification exists and should be understood not to preclude the existence or addition of one or more other features, number, operation, component, component, or combination thereof.

Hereinafter, preferred embodiments of the present disclosure will be described in detail based on the accompanying drawings.

The present disclosure provides a carbon dioxide and sulfur oxide capture system for ships, the system includes: a mixer for supplying a basic alkaline mixture; an absorption tower for capturing carbon dioxide in the flue gas by reacting the basic alkaline mixture supplied from the mixer, and the flue gas having fine droplets through a bubbler installed at the bottom; a separator for collecting a reactant containing carbon dioxide captured in the absorption tower and separating a carbon dioxide reactant and a waste solution from the reactant; and a discharge unit for sending carbon dioxide reactants from the separator to the absorption tower to collect sulfur oxides in the flue gas, and discharge the captured sulfur oxides, carbon dioxide reactants, and residual flue gas.

Hereinafter, a carbon dioxide and sulfur oxide capture system for ships, according to the present disclosure, will be described in more detail with reference to the drawings.

FIG. 1 is a schematic diagram illustrating a carbon dioxide and sulfur oxide capture system 100 for ships according to the present disclosure.

As shown in FIG. 1, the capture system 100 for ships, according to the present disclosure, captures carbon dioxide in the flue gas discharged from the ship using a basic alkaline solution and uses the captured carbon dioxide to capture sulfur oxide in the flue gas. The capture system includes an absorption tower 110, a carbon dioxide capturing unit 111 including a bubbler 113, a flue gas discharge source 120, a mixer 130, a separator 140, and a discharge unit 150.

The absorption tower 110 may refer to a facility, a building, or a facility for capturing carbon dioxide. In addition, the carbon dioxide capturing unit 111 positioned at the lower end of the absorption tower 110 is a part of the absorption tower 110 and may mean a part for capturing carbon dioxide by bubbling the flue gas.

The absorption tower 110 includes a carbon dioxide capturing unit 111 that captures carbon dioxide at the bottom and captures only carbon dioxide in the flue gas by reacting the basic alkaline mixture with the flue gas (flue gas microbubbles).

The absorption tower 110 has a nozzle installed at the top, and the basic alkaline mixture is sprayed from the mixer 130 through the nozzle into the absorption tower 110 and gathered in the carbon dioxide capturing unit 111 at the bottom. At the same time that the basic alkaline mixture is sprayed, the flue gas supplied from the flue gas discharge source 120 passes through the bubbler 113 in the carbon dioxide capturing unit 111 under the absorption tower 110, and the flue gas generated with microbubbles is supplied, and the basic alkaline mixture and the flue gas microbubbles react in the carbon dioxide capturing unit 111 to capture carbon dioxide. When flue gas is reacted with a basic alkaline mixture, the microbubbles are formed as the reactant passes through the bubbler 113, having a fine hole formed in the outlet of the flue gas discharge source 120.

In addition, the absorption tower 110 may include a level indicator 112 inside to detect the filling level of the solution in the absorption tower 110.

The nozzle may include a plurality of nozzles and may be formed in one or more stages. The nozzle may be connected to the mixer 130 to supply the basic alkaline mixed solution from the mixer 130.

The bubbler 113 may form microbubbles in the flue gas by passing through the flue gas supplied from the flue gas discharge source 120, and the smaller the bubble, the larger the reaction area between the flue gas and the alkaline solution, thereby increasing the carbon dioxide capturing capacity. For example, a microbubble may mean air bubbles existing in an aqueous solution having a size of about 50 µm or less.

The absorption tower 110 may be configured in series, parallel, or a series and parallel complex arrangement.

For example, the absorption tower 110 may be arranged in series when the flow rate of the flue gas is high. When unreacted CO₂ is discharged from the absorption tower because of a high flow rate of the absorption tower, the absorption tower can be installed in series to capture unreacted CO₂.

Also, for example, the absorption tower 110 may be arranged in parallel when the amount of the flow of the flue gas is large. When the amount of the flow of the flue gas exceeds the amount that can be captured by the absorption tower, the amount of carbon dioxide that can be captured may be increased by installing the absorption towers in parallel.

The flue gas discharge source 120 may utilize all gases that discharge carbon dioxide and sulfur oxide, for example, the rear end of power plant flue gas or the rear end of engine flue gas, and in this disclosure, the flue gas discharged from a ship's boiler, incinerator, engine, etc.

The mixer 130 mixes the basic alkaline solution supplied from the basic alkaline solution storage tank 131 and the water supplied from the water supply source 132 and supplies the mixture to the nozzle of the absorption tower 110.

The basic alkaline mixture in which the basic alkaline solution and water are mixed may be supplied using a separately connected bypass line 136 when a supply amount or a required amount of the mixture increases.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3 or 1:3 to 1:5.

As the mixing ratio of the basic alkali solution in the basic alkali solution and the water mixture increases, a carbon dioxide capture rate may increase, but the mixing ratio of water may be controlled in consideration of cost.

The basic alkaline mixture may include at least one oxide selected from the group consisting of SiO₂, Al₂O₃, Fe₂O₃, TiO₂, MgO, MnO, CaO, Na₂O, K₂O, and P₂O₃; at least one metal selected from the group consisting of Li, Cr, Co, Ni, Cu, Zn, Ga, Sr, Cd, and Pb; and at least one liquid composition selected from the group consisting of sodium tetraborate (Na₂B₄O₇·10H₂O), sodium hydroxide (NaOH), sodium silicate (Na₂SiO₃), and hydrogen peroxide (H₂O₂).

The water supply source 132 may include all water that may be easily obtained at a system installation site and may be, for example, seawater.

The average pH of the basic alkaline mixture may be at least pH 12. For example, the pH may be pH 12 to pH 12.5, pH 12, pH 12.2, pH 12.3, or pH 12.5. The pH of the basic alkaline mixed solution may be measured with a pH meter in the absorption tower 110, and when the pH of the basic alkaline mixed solution in the absorption tower 110 is less than 10.5, carbon dioxide cannot be captured anymore. Therefore, in order to match the pH of the basic alkaline mixture, the amount of the basic alkaline solution and the water may be adjusted to 0 to 100% by each valve 132 and 133 and supplied to mixer 130.

When the filling level of the basic alkaline mixture solution in the absorption tower 110 is lowered to less than 90% (measured by a level indicator), valve 135 is adjusted so that the basic alkaline mixture solution is introduced from the mixer 130, and the input may be stopped when the filling level of the solution reaches 100%. At the same time, the basic alkaline solution and water may be mixed until the pH of the basic alkaline mixed solution becomes 12.

Since the amount of the basic alkaline mixture supplied to the absorption tower 110 and the amount of the solution exiting the separator 140 are the same, the carbon dioxide capture system can be continuously maintained. The valve 135 (including the bypass valve if necessary) is adjusted so that the same amount of the basic alkali mixed solution as the flow meter value installed in the line from the absorption tower 110 to the separator 140 is supplied to the absorption tower 110, thereby making the net flow to 0.

The reactant containing carbon dioxide captured in the absorption tower 110 moves to the separator 140 to separate the carbon dioxide reactant and the waste solution from the reactant. The carbon dioxide reactant may be in a liquid state, and the waste solution may be in a gel state. For example, the separator 140 may separate a liquid carbon dioxide reactant and a gel waste solution using a centrifugal separation method.

The waste solution, excluding the carbon dioxide reactant from the reactant, is moved to the wastewater treatment tank 141 and discarded. For example, the waste solution may include a basic alkaline mixture (illite mineral, water, etc.) that has finished the role of a catalyst.

The carbon dioxide reactant may include sodium carbonate (Na₂CO₃) or sodium hydrogen carbonate (NaHCO₃).

The carbon dioxide reactant may be produced by reacting a basic alkaline mixture with carbon dioxide, as shown in Formula 1 below.

[Formula 1] 2NaOH + CO₂ → Na₂CO₃ + H₂O Na₂CO₃ + H₂O + CO₂ → 2NaHCO₃

The carbon dioxide reactant separated in the separator 140 is sent to the absorption tower 110 to capture sulfur oxides in the remaining flue gas after carbon dioxide is captured. In this case, the carbon dioxide reactant may be recycled as a desulfurization catalyst for removing sulfur oxides. Accordingly, it is possible to capture carbon dioxide and recycle the captured carbon dioxide in one system.

The carbon dioxide reactant and sulfur oxides in the residual flue gas may be captured by reacting, as shown in Formula 2 below.

[Formula 2] 2NaHCO₃ + SO₂ + 1/2O₂ → Na₂SO₄ + 2CO₂ + H₂O Na₂CO₃ + SO₂ + 1/2O₂ → Na₂SO₄ + 2CO₂

After the absorption of sulfur oxides in the absorption tower 110 is finished, the solution containing the captured sulfur oxides present in the absorption tower 110, the carbon dioxide reactant, and the residual flue gas from which carbon dioxide and sulfur oxides are removed may be discharged to the outside through the discharge unit 150. Specifically, the material discharged to the discharge unit 150 may discharge residual flue gas (N₂, O₂, etc.) from which carbon dioxide and sulfur oxides have been removed, and sodium sulfate (Na₂SO₄) formed by removing sulfur oxide by reacting carbon dioxide reactant with a sulfur oxide. The sodium sulfate may be floated in a solid state having a very small particle size and then emitted together with the residual flue gas.

At this time, since the concentration of carbon dioxide cannot exceed the regulation standard when the residual flue gas is discharged, based on the concentration of carbon dioxide in the atmosphere to which the residual flue gas is to be discharged (set by the administrator after measuring the carbon dioxide concentration in the atmosphere in advance), residual flue gas that does not exceed the standard can be discharged.

For example, the solution containing the captured sulfur oxides may be sodium sulfate (Na₂SO₄), and the carbon dioxide reactant may be sodium carbonate (Na₂CO₃) or sodium hydrogen carbonate (NaHCO₃).

The carbon dioxide and sulfur oxide capture system 100 for ships may further include: a monitoring unit 160 for monitoring the filling level and pH of the basic alkaline mixture in the absorption tower; and a control unit 161 for controlling the supply amount of the basic alkaline mixture by the monitoring unit 160.

The monitoring unit 160 manages the values of the gas meter, the pH meter, and the flow meter measured in all processes of the carbon dioxide and sulfur oxide capture system 100 for ships, and the control unit 161 is adjusted based on the values indicated by the monitoring unit 160. The valves 114, 133, 134, and 135 may be adjusted as a percentage with respect to a value input from the control unit 161.

The carbon dioxide and sulfur oxide capture system 100 for ships, according to the present disclosure, may reduce carbon dioxide by capturing carbon dioxide in the flue gas discharged from the ship and use the captured carbon dioxide to produce sodium carbonate or sodium hydrogen carbonate.

By using sodium carbonate or sodium bicarbonate prepared from the captured carbon dioxide as a desulfurization agent for capturing sulfur oxides in flue gas discharged from ships, carbon dioxide and sulfur oxides can be simultaneously captured in one system.

The above-described present disclosure is not limited to the above-described embodiments and the accompanying drawings, and it will be apparent to those skilled in the art that various replacements, modifications, and changes may be made without departing from the technical idea of the present disclosure.

### Industrial Applicability

The present disclosure can be widely used in a carbon dioxide and sulfur oxide capture system for ships.

## Claims

1. A carbon dioxide and sulfur oxide capture system for ships, comprising:
a mixer for supplying a basic alkali mixture;
an absorption tower for capturing carbon dioxide in flue gas by reacting the basic alkaline mixture supplied from the mixer and the flue gas having fine droplets through a bubbler installed at a bottom;
a separator for collecting a reactant containing carbon dioxide captured in the absorption tower and separating a carbon dioxide reactant and a waste solution from the reactant; and
a discharge unit for sending the carbon dioxide reactant from the separator to the absorption tower to capture sulfur oxides in the flue gas, and discharging the captured sulfur oxides, carbon dioxide reactant, and residual flue gas.

2. The system of claim 1, wherein the bubbler forms flue gas microbubbles using the flue gas.

3. The system of claim 1, wherein the mixer mixes a basic alkaline solution supplied from a basic alkaline solution storage tank and water supplied from a water supply source.

4. The system of claim 3, wherein the basic alkaline solution and water are mixed in a ratio of 1:1 to 1:5.

5. The system of claim 1, wherein the average pH of the basic alkaline mixture is 12 or more.

6. The system of claim 1, wherein the basic alkaline mixture comprises:
at least one oxide selected from the group consisting of SiO₂, Al₂O₃, Fe₂O₃, TiO₂, MgO, MnO, CaO, Na₂O, K₂O and P₂O₃;
at least one metal selected from the group consisting of Li, Cr, Co, Ni, Cu, Zn, Ga, Sr, Cd, and Pb; and
at least one liquid composition selected from the group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

7. The system of claim 1, wherein the absorption tower supplies the basic alkaline mixture from the mixer through a plurality of nozzles installed on the top thereof.

8. The system of claim 1, wherein the absorption tower is configured in series, parallel, or a series and parallel complex arrangement.

9. The system of claim 1, further comprising:
a monitoring unit for monitoring a filling level and pH of the basic alkaline mixture in the absorption tower; and
a control unit for controlling the supply amount of the basic alkaline mixture by the monitoring unit.

10. The system of claim 1, wherein the carbon dioxide reactant comprises sodium carbonate (Na₂CO₃) or sodium hydrogen carbonate (NaHCO₃).
